# FASCICULE DE BREVET EUROPEEN

(11) **EP 3 917 887 B1**
(45) Date de publication et mention de la délivrance du brevet: **14.10.2026**
(21) Numéro de dépôt: 20702011.6
(22) Date de dépôt: 27.01.2020
(51) Int. Cl.: C02F 3/30, C02F 3/12, C02F 11/04

(54) **PROCEDE ET INSTALLATION DE RECUPERATION DE PHOSPHORE DANS UN EFFLUENT DE BOUES ISSUES D'EAUX USEES**
VERFAHREN UND ANLAGE ZUR RÜCKGEWINNUNG VON PHOSPHOR IN KLÄRSCHLAMMABWASSER
METHOD AND UNIT FOR RECOVERING PHOSPHOROUS IN SEWAGE SLUDGE EFFLUENT

(30) Priorité: 28.01.2019 FR 1900734
(43) Date de publication de la demande: 08.12.2021
(73) Titulaire: Suez International, 92800 Puteaux (FR)
(72) Inventeur: DELAHAYE, Mathieu, 78350 JOUY EN JOSAS (FR); ROCHE, Clément, 07690 SAINT-ANDRE EN VIVARAIS (FR)
(74) Mandataire: LLR
(86) Numéro de dépôt international: PCT/EP2020/051877
(87) Numéro de publication internationale: WO 2020/156978

(56) Documents cités:
- EP-A2- 1 555 245
- WO-A1-03/097540
- WO-A1-2014/110429
- GB-A- 2 228 930
- JP-A- H11 188 383
- US-A- 6 106 717
- US-B1- 6 338 799

## Description

La présente invention se situe dans le domaine du traitement des eaux usées - qu'elles soient municipales et/ou industrielles - et plus particulièrement dans le domaine de la récupération du phosphore. L'invention concerne un procédé et une installation de récupération de phosphore dans les eaux usées, et notamment dans un effluent de boues issues d'eaux usées.

Le traitement des eaux usées est nécessaire à la protection de l'environnement. Une station d'épuration est constituée de deux parties principales, le traitement de l'eau usée et le traitement des boues issues du traitement de l'eau. L'objectif du traitement des eaux usées est d'éliminer la pollution, notamment la pollution particulaire (on parle aussi de matières en suspension), et en particulier la pollution carbonée, azotée et phosphorée. Une station d'épuration permet également de récupérer des ressources - telles que le phosphore - ou de générer de l'énergie, par exemple via la production de biogaz.

La plupart des ressources naturelles sont limitées : il apparaît de plus en plus critique de les recycler. Ainsi, le phosphore est un élément fertilisant, indispensable aux cultures et non remplaçable. Il est donc souhaitable de le recycler au maximum. Par ailleurs, l'urbanisation croissante et l'augmentation démographique entraînent une pression importante sur le foncier disponible pour les usines de traitements des eaux usées. Celles-ci doivent être plus compactes alors même qu'elles doivent faire face à des quantités de pollution à traiter plus importantes.

Actuellement, le traitement du phosphore sur une station d'épuration est principalement effectué de deux manières qui peuvent être complémentaires : par voie physicochimique ou par voie biologique.
Le traitement par voie physico-chimique consiste en la précipitation du phosphore généralement sous forme de sel métallique ou alcalinoterreux. Une telle précipitation est effectuée par ajout d'un sel métallique, comme par exemple le chlorure ferrique, ou d'un sel alcalinoterreux, en particulier un sel de calcium tel que le chlorure de calcium, aux effluents riches en phosphore. Cet ajout entraîne la précipitation du phosphore qui est alors extrait de la filière de traitement des eaux dans un séparateur, le phosphore précipité avec le sel métallique ou alcalinoterreux étant retenu dans les boues physico-chimiques issues de la séparation.

Le traitement par voie biologique via la suraccumulation du phosphore dans les boues biologiques au travers de la mise en place d'une déphosphatation biologique dont le principe consiste à incorporer dans la biomasse cellulaire le phosphore initialement présent dans l'eau brute, puis à l'évacuer avec les boues biologiques en excès.

La déphosphatation biologique (*i.e.* traitement du phosphore par voie biologique) est réalisée par la succession d'une étape de traitement en condition anaérobie et d'une étape de traitement en condition aérobie avec recirculation des boues entre ces deux étapes. En effet, certaines bactéries appelées organismes accumulateurs de polyphosphate (également connues sous l'acronyme anglo-saxon Polyphosphate-Accumulating Organisms ou PAO) ont la caractéristique de suraccumuler le phosphore lorsqu'elles sont soumises à une alternance de conditions anaérobie et aérobie. Les PAO relarguent des phosphates pendant leur séjour en condition anaérobie, et en passant ensuite en condition aérobie, ils accumulent une quantité de phosphates supérieure à celle relarguée en condition anaérobie.

Par conséquent, la concentration de phosphates dans l'effluent est diminuée en fin de traitement par extraction des boues contenant les PAO chargés en phosphore. La fraction liquide ainsi obtenue contient une concentration en phosphore suffisamment basse pour être rejetée dans l'environnement.

La récupération du phosphore dans les eaux usées (par exemple pour le valoriser) nécessite un effluent suffisamment concentré en phosphore, ce qui est le cas d'un effluent obtenu après relargage du phosphore suraccumulé par les PAO, notamment par soumission des PAO ayant suraccumulé du phosphore en conditions anaérobie.

Ainsi, lorsque les boues en excès obtenues après déphosphatation biologique sont soumises à un traitement en condition anaérobie, l'effluent issu de celles-ci devient chargé en phosphore soluble (notamment sous forme de phosphate dissout). La récupération du phosphore peut alors être effectuée via une précipitation par ajout d'ions comme le magnésium, le potassium ou le calcium, en fonction de la forme minérale souhaitée (struvite, brushite, apatite...).

Un procédé amélioré de récupération du phosphore comprend typiquement une étape d'élimination biologique des nutriments, appelé en anglais « *Biological Nutrient Removal* » (BNR) ou « *Enhanced Biological Nutrient Removal* » (EBNR), couplée à une étape de relargage du phosphore dans la fraction liquide des effluents, et une étape de précipitation du phosphore relargué. Lors de l'étape d'élimination biologique des nutriments, l'effluent est traité biologiquement : il est additionné de PAO, puis est successivement mis en conditions anaérobie et aérobie (en général avec recirculation des boues entre les bassins aérobie et anaérobie). Cette succession de conditions anaérobie et aérobie permet la suraccumulation du phosphore par les PAO. Les PAO (chargés en phosphore) sont extraits du bassin de traitement biologique (par exemple lors d'une étape de clarification) puis généralement envoyés en digestion anaérobie. Lors de la digestion, l'effluent est en conditions anaérobie, ce qui favorise le relargage du phosphore: les centrats de digestion anaérobie contiennent alors une forte concentration en phosphore dissous. De tels procédés sont par exemple décrits dans « Phosphorus Removal and Recovery Technologies », Brett et al. (Centre Européen d'Etudes des Polyphosphates E. V., 1997), published by Selper Publications (ISBN : 0948411 10 0), voir en particulier les chapitres 4, 5 et 6.

De tels procédés de récupération du phosphore présentent néanmoins les inconvénients suivants :
- le taux de récupération moyen du phosphore est relativement faible par rapport à la quantité entrante sur la station d'épuration (faible rendement de récupération global sur une station d'épuration) : le taux de récupération moyen du phosphore est de l'ordre de 10% à 15%, une partie conséquente du phosphore restant piégée dans les boues déshydratées après la digestion ;
- les opérations de maintenance sont fréquentes et coûteuses car la récupération du phosphore a généralement lieu après la digestion des boues, ce qui ne permet pas de prévenir les phénomènes de précipitation du phosphore (sous forme de struvite), cause d'« entartrage » des digesteurs et/ou canalisations, donc de réduction de leur volume utile ;
- le retour sur investissement est long du fait des relativement faibles rendements en phosphore récupéré et pouvant être valorisés par exemple sous forme d'engrais ou de produits chimiques.

La demande de brevet EP 2238081 divulgue un procédé de récupération du phosphore visant à limiter la précipitation indésirable du phosphore sous forme de struvite dans le digesteur et/ou les canalisations. Ledit procédé consiste essentiellement en la formation d'un effluent riche en phosphore d'une part, et d'un effluent riche en azote (sous forme d'ammonium) d'autre part, qui ne sont réunis que dans le réacteur de struvite. La précipitation du phosphore sous forme de struvite est ainsi limitée en amont du réacteur de struvite. La demande EP2238081 propose ainsi de faire relarguer le phosphore sous forme de phosphates dissouts avant l'étape de digestion, de séparer les boues de l'effluent liquide enrichi en phosphore, boues qui elles vont subir l'étape de digestion qui va les enrichir en azote (sous forme d'ammonium). Le centrat riche en azote est alors récupéré pour être mélangé à l'effluent liquide enrichi en phosphore dans un réacteur de struvite, pour précipiter le phosphore et l'ammonium sous forme de struvite. Toutefois, le procédé de EP 2238081 ne permet pas d'augmenter significativement le taux de récupération global du phosphore sur une station d'épuration. Les documents EP 1555245, US 6106717, JP H11 188383, WO03/097540, GB 2228930 et US 6338799 décrivent des procédés de récupération de phosphore dans un effluent de l'art antérieur.

Par ailleurs, les procédés conventionnels nécessitent des installations avec une grande emprise au sol. Une solution pour rendre plus compact le traitement des eaux usées est de fonctionner avec plus de bactéries dans les bassins de traitement biologique. Plusieurs solutions existent comme les réacteurs à biofilms fixés tels les biofiltres, les bactéries se fixant en grand nombre sur des médias, ou bien les réacteurs biologiques à membranes : les membranes permettent de filtrer l'eau traitée sans laisser partir les bactéries (c'est-à-dire les boues) qui peuvent rester dans les réacteurs jusqu'à atteindre une certaine concentration, plus élevées que les concentrations ordinaires des réacteurs biologiques. En effet, les réacteurs de traitement biologique conventionnels (avec boues activées) fonctionnent à des concentrations en boues de l'ordre de 3 g/l. Au-delà de cette concentration, il apparaît des problèmes de décantabilité des boues dans les clarificateurs. Il est alors difficile d'obtenir une eau traitée de qualité car une partie des boues sort des clarificateurs avec l'eau traitée sous forme de matières en suspension. Pour contourner ce problème, plusieurs technologies ont été développées comme les boues granulaires ou les boues densifiées.

Une technologie de boues densifiées, telle que celle présentée dans le document US 2015/0376043, utilise le fait que les PAO sont des organismes plus denses que les autres bactéries présentes dans les bassins d'aération. La technologie repose alors sur le fait de conserver au maximum ces PAO dans le réacteur biologique et d'extraire les boues plus légères. Ainsi, les bassins biologiques fonctionnent avec des boues plus lourdes, qui décantent mieux. Il est alors possible de faire fonctionner ces bassins à des concentrations plus élevées et donc de réduire leurs volumes. La sélection des boues les plus lourdes se fait par sélecteur gravimétrique ou sélecteur gravitaire externe, par exemple via un hydrocyclone. Néanmoins, dans ce document, seules les boues légères subissent des étapes ultérieures de traitement. Les boues lourdes, riches en PAO sont soit sorties du système pour destruction, soit recirculées en boucle sur le bassin biologique. Ce document ne décrit pas d'étape de relargage sélectif du phosphore, et ne propose pas de solution autre que la sélection gravimétrique pour s'affranchir des problématiques de précipitation indésirable du phosphore dans l'installation.

L'invention vise à pallier tout ou partie des problèmes cités plus haut en proposant un procédé de récupération de phosphore avec un rendement amélioré, grâce à une utilisation optimisée des capacités de captation du phosphore par les PAO. Les quantités de phosphore envoyées vers le traitement final des boues (*i.e.* non valorisées) sont ainsi minimisées. L'invention permet ainsi d'optimiser la récupération de phosphore sur une installation de traitement des eaux, tout en minimisant l'emprise au sol de l'installation, comme il ressort de la description ci-après.

Ainsi, l'invention propose de recycler les PAO afin qu'ils puissent effectuer plusieurs cycles de captation du phosphore, et ainsi augmenter le taux de récupération global du phosphore.

Plus précisément, l'invention a pour objet un procédé de récupération de phosphore dans un effluent d'eaux usées issues d'une étape de traitement biologique, ledit effluent comprenant une fraction solide et une fraction liquide, caractérisé en ce qu'il comprend les étapes successives suivantes :
une première étape de séparation d'au moins une partie de la fraction solide de l'effluent, pour obtenir un effluent léger et un effluent lourd,
ledit effluent lourd incluant des organismes accumulateurs de polyphosphate chargés en phosphore ;
   une deuxième étape de relargage du phosphore par lesdits organismes accumulateurs de polyphosphate chargés en phosphore de l'effluent lourd, pour former un effluent riche en phosphore dissout et contenant les organismes accumulateurs de polyphosphate déchargés de phosphore,
   ledit effluent riche en phosphore comprenant une fraction liquide riche en phosphore dissout ;
une troisième étape de séparation de l'effluent riche en phosphore dissout en une fraction liquide riche en phosphore dissout, et une fraction solide riche en organismes accumulateurs de polyphosphate déchargés de phosphore ;
une quatrième étape de recirculation de la fraction solide de la troisième étape vers l'étape de traitement biologique ;
une cinquième étape de précipitation du phosphore dissout de la fraction liquide de la troisième étape sous forme d'un solide à base de phosphore.

Le procédé de l'invention, qui allie une étape de séparation de l'effluent issu d'eaux usées traité biologiquement en un effluent léger et un effluent lourd enrichi en PAO chargés en phosphore (première étape), à une étape de recirculation des PAO déchargés en phosphore (quatrième étape) pour que ceux-ci subissent à nouveau une suraccumulation du phosphore, permet d'obtenir un rendement global de récupération du phosphore supérieur aux procédés connus de l'art antérieur. En outre, l'utilisation d'une technologie de boues densifiées permet d'utiliser des réacteurs compacts, ce qui limite l'emprise au sol des installations. Les boues densifiées traitées dans l'étape de traitement biologique sont très chargées en PAO, et présentent en outre des propriétés de décantabilité supérieures.

Le traitement biologique d'eaux usées comprend typiquement une étape d'élimination biologique des nutriments, appelé en anglais « Biological Nutrient Removal » (BNR) ou « Enhanced Biological Nutrient Removal » (EBNR). L'élimination biologique des nutriments comprend typiquement trois sous-étapes dont l'ordre peut varier, mais qui se succèdent en général dans cet ordre: une étape anoxie, une étape anaérobie et une étape aérobie. On peut citer comme exemple d'un tel procédé le procédé Phostrip, Bardenpho ou le procédé UCT (« University of Cape Town »). De tels procédés sont par exemple décrits par Brett et al. (« Phosphorus Removal and Recovery Technologies », Centre Européen d'Etudes des Polyphosphates E. V., 1997, publié par Selper Publications (ISBN : 0948411 10 0), chapitre 4). L'homme du métier sait mettre en œuvre une telle étape d'élimination biologique des nutriments, notamment en fonction des territoires et des caractéristiques des eaux usées à traiter par la station d'épuration. Un traitement biologique comprend généralement une étape de décantation et/ou clarification.

L'effluent d'eaux usées issues de l'étape de traitement biologique comprend ainsi typiquement un mélange de solides, de liquides et de microorganismes. Il peut notamment comprendre ou consister en des boues biologiques ou de la boue activée, notamment des boues biologiques en excès (en anglais « Waste Activated Sludge » ou WAS) ou des boues biologies recirculées (en anglais « Recirculated Activated Sludge » ou RAS), ou un mélange de celles-ci.

Dans la présente invention, la teneur en matière sèche d'un effluent et/ou d'une boue est mesurée typiquement selon la méthode décrite dans la norme DIN EN 14346 de mars 2007.

La fraction solide de l'effluent d'eaux usées issues d'une étape de traitement biologique possède typiquement une teneur en matière sèche supérieure ou égale à 1 g.L⁻¹, notamment supérieure strictement à 1 g.L⁻¹, de préférence supérieure ou égale à 2 g.L⁻¹. La fraction solide de l'effluent d'eaux usées issues de l'étape de traitement biologique selon l'invention est donc une boue. Dans le cas d'un procédé de boues densifiées, ladite fraction solide possède typiquement une teneur en matière sèche supérieure ou égale à 3 g.L⁻¹, de préférence supérieure ou égale à 4 g.L⁻¹. Selon certains modes de réalisation, ladite fraction solide de la première étape possède une teneur en matière sèche supérieure ou égale à 6 g.L⁻¹.

La fraction liquide de l'effluent d'eaux usées issues d'une étape de traitement biologique possède typiquement une teneur en matière sèche inférieure ou égale à 1 g.L⁻¹, notamment inférieure strictement à 1 g.L⁻¹, de préférence inférieure ou égale à 0.5 g.L⁻¹.

Au sens de l'invention, la première étape comprend ou consiste en une séparation solide/solide de la fraction solide, permettant de trier les boues en deux fractions : l'effluent léger appauvri en PAO et l'effluent lourd contenant la boue enrichie en PAO. La première étape est typiquement mise en œuvre dans un sélecteur, tel qu'un sélecteur gravimétrique, par exemple un sélecteur gravitaire externe, de préférence un hydrocyclone. Ainsi, typiquement, la première étape consiste à faire passer la fraction solide, c'est-à-dire une boue, contenant des PAO dans un sélecteur gravimétrique. La première étape peut également être mise en œuvre dans un filtre. De préférence, la première étape est mise en œuvre dans un hydrocyclone, tel que décrit par exemple dans le brevet US9242882.

Préférentiellement, l'effluent léger de la première étape - qui contient typiquement un mélange de solides, de liquides et de microorganismes - présente une densité inférieure ou égale 1,05 g.m⁻³, par exemple de 1,002 à 1,050 g.m⁻³, typiquement de 1,031 à 1,035 g.m⁻³. L'effluent léger est déchargé d'organismes accumulateurs de polyphosphate, c'est-à-dire qu'il comprend peu, voire pas de PAO.
Préférentiellement, l'effluent lourd présente une densité supérieure ou égale 1,06 g.m⁻³, notamment de 1,06 à 1,10 g.m⁻³, typiquement 1,07 à 1,085 g.m⁻³. Celui-ci comprend l'essentiel des PAO présents initialement dans l'effluent d'eaux usées issues d'une étape de traitement biologique.

La deuxième étape est typiquement mise en œuvre dans une cuve, ou plus spécifiquement dans un réacteur de relargage.

La deuxième étape a lieu en conditions anaérobie : dans ces conditions, il est connu de l'homme du métier que les PAO relarguent le phosphore. L'homme du métier saura choisir notamment les conditions de température, pH, temps de séjour, de cette étape pour obtenir le résultat souhaité. Par exemple, le temps de séjour dans la cuve est compris entre 1h et 48h, de préférence entre 1h et 24h, notamment entre 2h et 12h.

Selon un mode de réalisation avantageux, la deuxième étape de relargage du phosphore comprend une addition de carbone biodégradable à l'effluent lourd. L'ajout de carbone biodégradable favorise la libération de phosphore par les microorganismes. Le carbone biodégradable peut être du carbone rapidement biodégradable (en anglais « *Rapidly Biodegradable Carbone* » ou RBC), tel que des acides gras volatiles, avantageusement de l'acide acétique ou de l'acide proprionique. Alternativement, il peut s'agir de carbone lentement biodégradable (en anglais « *Slowly Biodegradable Carbone* » ou SBC), et/ou de précurseurs de carbone biodégradable. Il peut en particulier s'agir de boues primaires, fermentées ou non, ou de surnageant ou eaux décantées de boues primaires.

Typiquement, lorsque du carbone biodégradable est ajouté lors de la deuxième étape, le temps de séjour nécessaire s'en trouve réduit, notamment lorsqu'il s'agit de RBC. Le temps de séjour nécessaire est alors en général compris entre 1h et 8h.

La troisième étape peut être une étape de clarification ou une étape d'épaississement. La fraction solide de l'étape 3 possède typiquement une teneur en matière sèche supérieure ou égale à 5 g.L⁻¹, notamment supérieure à 10 g.L⁻¹, notamment comprise entre 10 et 60 g.L⁻¹. Par comparaison, l'effluent riche en phosphore dissout obtenu à l'issue de l'étape b) présente typiquement une teneur en matière sèche comprise entre 4 et 12 g.L⁻¹.

Ainsi, selon un premier mode de réalisation, la troisième étape est une étape d'épaississement de l'effluent riche en phosphore contenant les organismes accumulateurs de polyphosphate pour extraire dudit effluent un centrat riche en phosphore et un effluent épaissi contenant les organismes accumulateurs de polyphosphate. Selon un deuxième mode de réalisation, la troisième étape est une étape de clarification de l'effluent riche en phosphore contenant les organismes accumulateurs de polyphosphate pour extraire de l'effluent un centrat riche en phosphore et un effluent plus concentré en matière sèche contenant les organismes accumulateurs de polyphosphate.

La cinquième étape est de préférence mise en œuvre dans un réacteur de précipitation, tel qu'un réacteur infiniment mélangé, ou un réacteur à lit fluidisé, tel que décrit notamment dans le chapitre 5 de Brett et al. Un exemple de réacteur de précipitation commercial, utile en particulier pour précipiter le phosphore sous forme de struvite, est le Crystallactor^{®}. Le solide à base de phosphore est généralement un précipité de phosphate, notamment un sel de phosphate avec un métal, un alcalino-terreux et/ou de l'ammonium.

Avantageusement, au moins une source de contre-ion est ajoutée lors de la cinquième étape de précipitation, pour améliorer le rendement de cette étape. Typiquement, lorsque le phosphore est précipité sous forme de struvite, la source de contre-ion est du magnésium et/ou de l'ammonium. Lorsque le phosphore est précipité sous forme d'apatite ou de brushite, la source de contre-ion comprend typiquement du calcium.

Selon un mode de réalisation, la troisième étape est une étape d'épaississement de l'effluent riche en phosphore contenant les organismes accumulateurs de polyphosphate pour extraire de l'effluent un centrat riche en phosphore et un effluent épaissi contenant les organismes accumulateurs de polyphosphate, qui sont typiquement recirculés vers le réacteur biologique. Selon ce mode de réalisation, l'effluent épaissi présente une concentration en matière sèche typiquement comprise entre 20 g/l et 60 g/L, préférentiellement au moins 30 g/L.

Dans un mode de réalisation du procédé selon l'invention, le solide à base de phosphore est de la struvite. La struvite a pour formule NH₄MgPO₄, et est obtenue selon la réaction de précipitation suivante :

NH₄⁺ + PO₄3⁻ + Mg²⁺ → NH₄MgPO₄

Selon ce mode de réalisation, lors de l'étape de précipitation de struvite, le phosphore issu de l'effluent liquide riche en phosphore provient de préférence du centrat riche en phosphore et l'ammonium provient avantageusement de l'effluent riche en ammonium et/ou d'un ajout externe d'ammonium. Un ajout externe de magnésium, notamment sous forme de chlorure de magnésium et/ou d'oxyde de magnésium peut également être effectué lors de cette étape, pour augmenter le rendement de précipitation de struvite. Lors de cette étape, une base telle que l'hydroxyde de sodium (NaOH) peut également être ajoutée pour ajuster le pH dans une plage permettant d'optimiser la précipitation de struvite. Avantageusement, le pH est ajusté à une valeur comprise entre 7.5 et 8.
La précipitation de struvite permet de récupérer le phosphore. Une fois collectée, la struvite peut être lavée, séchée, et de préférence emballée. La struvite peut être valorisée par la suite, par exemple comme engrais et/ou fertilisant.

Dans un mode de réalisation du procédé selon l'invention, le solide à base de phosphore est de l'apatite ou de la brushite. Selon ce mode de réalisation, une source externe de calcium peut être ajoutée lors de l'étape de précipitation. Il s'agit d'une alternative de récupération effectuée via une précipitation du phosphore sous forme minérale selon le pH du milieu. Là encore, la précipitation de brushite ou d'apatite permet de récupérer le phosphore. Une fois collectée, elle(s) peut/peuvent être lavée(s), séchée(s), et de préférence emballée(s).

Selon un mode de réalisation particulier de l'invention, le procédé comprend en outre une étape de digestion de l'effluent léger et/ou de l'effluent d'eaux usées issues d'une étape de traitement biologique pour former un digestat. Avantageusement, le procédé comprend alors une étape de déshydratation du digestat pour former une fraction solide déshydratée et un effluent (liquide) riche en ammonium.

Ainsi, lorsque le solide à base de phosphore est de la struvite, lors de la cinquième étape, le phosphore issu de l'effluent riche en phosphore provient de la fraction liquide de la troisième étape, fraction riche en phosphore dissout, et l'ammonium provient de l'effluent riche en ammonium ou d'un ajout externe d'ammonium.

Dans un autre mode de réalisation, le procédé selon l'invention peut comprendre une étape de recirculation de l'effluent léger de la première étape vers le réacteur biologique.

Selon un mode de réalisation avantageux, l'effluent léger de la première étape est envoyé vers une étape subséquente de traitement des boues, et n'est pas recirculé dans le procédé.

Dans un autre mode de réalisation, le procédé selon l'invention peut comprendre :
- une étape de mise en contact de la fraction solide de la troisième étape, notamment un effluent épaissi, avec des eaux pour former un mélange, typiquement dans un réservoir de contact ;
- une étape d'alimentation avec le mélange de l'étape de traitement biologique.
Il en résulte une amélioration des conditions de croissance des PAO par mise en contact avec le carbone des eaux brutes en conditions anaérobie.

Selon l'invention, le procédé comprend, préalablement à la première étape de séparation de la fraction solide d'au moins une partie de l'effluent, une étape de clarification de l'effluent d'eaux usées issues d'un traitement biologique. Avantageusement, le procédé selon ce mode de réalisation comprend une étape de recirculation d'au moins une partie de l'effluent clarifié après l'étape de clarification de l'effluent issu d'eaux usées traité biologiquement dans le réacteur biologique vers le réacteur biologique.

Selon un mode de réalisation de l'invention, l'effluent liquide obtenu à l'issue de la cinquième étape est renvoyé en tête de station, ou renvoyé vers l'étape de traitement biologique.

Il en résulte un bénéfice de la récupération du phosphore et de la densification du procédé de traitement biologique grâce au couplage entre le sélecteur et le réacteur de relargage. Le réacteur de relargage est alimenté par un type précis de bactéries, les PAO, sélectionnées grâce à l'utilisateur du sélecteur, qui réalisent la suraccumulation du phosphore dans une zone aérobie du traitement biologique et le relargage en condition anaérobie du réacteur de relargage.

Selon un autre aspect, l'invention concerne :
une installation de récupération de phosphore dans un effluent d'eaux usées issues d'une étape de traitement biologique dans un réacteur biologique, ledit effluent comprenant une fraction solide et une fraction liquide, ladite installation étant caractérisée en ce qu'elle comprend :
- un sélecteur, destiné à séparer au moins une partie de la fraction solide de l'effluent pour obtenir un effluent léger et un effluent lourd, ledit effluent lourd incluant des organismes accumulateurs de polyphosphate chargé en phosphore,
- un réacteur de relargage en sortie du sélecteur et configuré de sorte que, en conditions anaérobie, les organismes accumulateurs de polyphosphate chargé en phosphore de l'effluent lourd relarguent du phosphore pour former un effluent riche en phosphore dissout et contenant les organismes accumulateurs de polyphosphate déchargés de phosphore, ledit effluent riche en phosphore comprenant une fraction liquide riche en phosphore dissout,
- un séparateur en sortie du réacteur de relargage destiné à séparer l'effluent riche en phosphore dissout en une fraction liquide riche en phosphore dissout, et une fraction solide riche en organismes accumulateurs de polyphosphate déchargés de phosphore,
- une boucle de recirculation entre le séparateur et le réacteur biologique destinée à recirculer l'effluent riche en phosphore,
- un réacteur de précipitation en sortie du séparateur configuré à être alimenté par la fraction liquide de l'effluent riche en phosphore dissout, de sorte à précipiter le phosphore dissout sous forme d'un solide à base de phosphore.

Selon un mode de réalisation avantageux, le sélecteur est un sélecteur gravimétrique, par exemple un sélecteur gravitaire externe, de préférence un hydrocyclone.

Selon un mode de réalisation de l'invention, le séparateur est un épaississeur configuré pour extraire dudit effluent un centrat riche en phosphore et un effluent épaissi contenant les organismes accumulateurs de polyphosphate.

Selon un autre mode de réalisation de l'invention, le séparateur est un clarificateur configuré pour extraire de l'effluent un centrat riche en phosphore et un effluent plus concentré en matière sèche contenant les organismes accumulateurs de polyphosphate.

Selon un mode de réalisation de l'invention, l'installation comprend un digesteur en sortie du sélecteur et configuré à être alimenté par l'effluent léger et/ou l'effluent d'eaux usées traités biologiquement, de sorte à former un digestat.

Selon un autre mode de réalisation de l'invention, l'installation comprend une unité de déshydratation en sortie du digesteur et configurée pour être alimentée par le digestat de sorte à former une fraction solide déshydratée et un effluent riche en ammonium.

Selon un autre mode de réalisation de l'invention, le solide à base de phosphore étant de la struvite, le réacteur de précipitation est configuré pour être alimenté en phosphore par le centrat riche en phosphore et en ammonium par l'effluent riche en ammonium, et/ou en ce que l'installation comprend un injecteur d'ammonium relié au réacteur de précipitation. Avantageusement, le réacteur de précipitation est configuré pour être alimenté en magnésium par un injecteur de Magnésium, de préférence sous forme solide, notamment sous forme de MgCl₂ ou de MgO.

Selon un autre mode de réalisation de l'invention, le solide à base de phosphore étant de l'apatite ou de la brushite, le réacteur de précipitation est configuré pour être alimenté en phosphore par le centrat riche en phosphore, et en ce que l'installation comprend un injecteur de calcium relié au réacteur de précipitation.

Selon un autre mode de réalisation de l'invention, l'installation peut comprendre un réservoir de contact en sortie du sélecteur et configuré à être alimenté par la fraction solide riche en organismes accumulateurs de polyphosphate déchargés de phosphore et des eaux usées, de sorte à former un mélange, ledit réservoir de contact étant configuré à alimenter le réacteur biologique avec ledit mélange.

Selon un autre mode de réalisation de l'invention, l'installation peut comprendre un injecteur de carbone biodégradable relié au réacteur de relargage.

L'invention sera mieux comprise et d'autres avantages apparaîtront à la lecture de la description détaillée d'un mode de réalisation donné à titre d'exemple, description illustrée par le dessin joint dans lequel :
La figure 1 illustre les étapes d'un mode de réalisation du procédé de récupération de phosphore selon l'invention ;
La figure 2 illustre les étapes d'un autre mode de réalisation du procédé de récupération de phosphore selon l'invention ;
La figure 3 illustre les étapes d'un autre mode de réalisation du procédé de récupération de phosphore selon l'invention ;
La figure 4 illustre les étapes d'un autre mode de réalisation du procédé de récupération de phosphore selon l'invention ;
La figure 5 illustre les étapes d'un autre mode de réalisation du procédé de récupération de phosphore selon l'invention ;
La figure 6 représente schématiquement un mode de réalisation de l'installation de récupération de phosphore selon l'invention ;
La figure 7 représente schématiquement un autre mode de réalisation de l'installation de récupération de phosphore selon l'invention ;
La figure 8 représente schématiquement un autre mode de réalisation de l'installation de récupération de phosphore selon l'invention.

Par souci de clarté, les mêmes éléments porteront les mêmes repères dans les différentes figures.

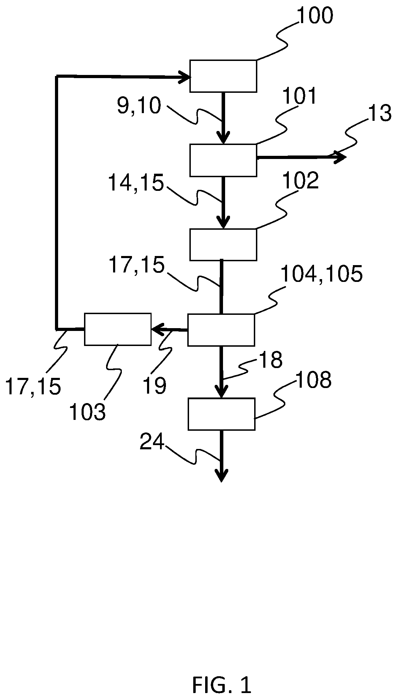

La figure 1 illustre les étapes d'un mode de réalisation du procédé de récupération de phosphore dans un effluent selon l'invention. Un effluent est un fluide résiduaire, traité ou non traité, d'origine agricole, industrielle ou urbaine, rejeté directement ou indirectement à partir d'un plan d'eau naturel ou une structure humaine dans l'environnement. Les eaux usées sont des effluents.

En référence à la figure 1, un effluent 9, 10 est issu d'eaux usées traité biologiquement (étape 100) dans un réacteur biologique 11. L'effluent comprend un premier mélange de solides, de liquides et de microorganismes, et se décompose en une fraction solide et une fraction liquide. La fraction solide de l'effluent d'eaux usées issues d'une étape de traitement biologique possède typiquement une teneur en matière sèche supérieure ou égale à 1 g.L⁻¹, notamment supérieure strictement à 1 g.L⁻¹, de préférence supérieure ou égale à 2 g.L⁻¹. Dans le cas d'un procédé de boues densifiées, ladite fraction solide possède typiquement une teneur en matière sèche supérieure ou égale à 3 g.L⁻¹, de préférence supérieure ou égale à 4 g.L⁻¹. Selon certains modes de réalisation, ladite fraction solide de la première étape possède une teneur en matière sèche supérieure ou égale à 6 g.L⁻¹. La fraction liquide de l'effluent d'eaux usées issues d'une étape de traitement biologique possède typiquement une teneur en matière sèche inférieure ou égale à 1 g.L⁻¹, notamment inférieure strictement à 1 g.L⁻¹, de préférence inférieure ou égale à 0.5 g.L⁻¹.

Le procédé de récupération de phosphore dans un effluent 9, 10 comprend une première étape 101 de séparation d'au moins une partie de la fraction solide de l'effluent 9, 10 dans un sélecteur 12, pour obtenir un effluent léger 13 et un effluent lourd 14. Le sélecteur 12 est un dispositif qui permet de sélectionner les boues les plus lourdes et de les séparer des boues dites légères. Il peut s'agir de manière non limitative d'un sélecteur gravimétrique, d'un hydrocyclone. L'effluent léger 13 présente une densité inférieure ou égale 1,05 g.m⁻³, par exemple de 1,002 à 1,050 g.m⁻³, et de préférence de 1,031 à 1,035 g.m⁻³, et contient un mélange de solides, de liquides et de microorganismes. L'effluent léger est déchargé (i.e. peu concentré) d'organismes accumulateurs de polyphosphate, ou en contient très peu. L'effluent lourd 14 présente une densité supérieure ou égale 1,06 g.m⁻³, par exemple de 1,060 à 1,100 g.m⁻³, et de préférence de 1,070 à 1,085 g.m⁻³, et contient un mélange de solides, de liquides et de microorganismes, lesdits microorganismes incluant des organismes accumulateurs de polyphosphate 15 chargés en phosphore. La première étape 101 consiste donc à faire passer la fraction solide contenant des PAO dans un sélecteur gravimétrique pour opérer une séparation solide/solide permettant de trier cette boue en deux fractions : l'effluent léger appauvri en PAO et l'effluent lourd contenant la boue enrichie en PAO. Comme ce sont les PAO qui contiennent le phosphore qui sera récupéré dans les étapes suivantes (décrites ci-dessous), et que les PAO sont plus denses, on les retrouvera dans la fraction lourde du sélecteur. L'effluent lourd est donc enrichi en PAO. L'effluent lourd est à la fois plus concentré en boue et en PAO.

Le procédé selon l'invention comprend une deuxième étape 102 de relargage du phosphore par les organismes accumulateurs de polyphosphate 15 chargés en phosphore de l'effluent lourd. Cette étape peut par exemple avoir lieu dans un réacteur de relargage 16 en conditions anaérobie. Le temps de séjour dans le réacteur de relargage est par exemple compris entre 1h et 48h, de préférence entre 1h et 24h, notamment entre 2h et 12h. Le relargage du phosphore dans l'effluent lourd 14 contenant les organismes accumulateurs de polyphosphate 15 permet de former un effluent riche en phosphore 17 dissout et contenant les organismes accumulateurs de polyphosphate 15 déchargés de phosphore, ledit effluent riche en phosphore 17 comprenant une fraction liquide riche en phosphore dissout. Autrement dit, dans la deuxième étape 102, l'effluent lourd 14 est placé en condition anaérobie afin de permettre le relargage par les microorganismes accumulateurs de polyphosphate 15 du phosphore suraccumulé et sa dissolution dans la partie liquide de l'effluent, qui constitue alors la fraction liquide riche en phosphore dissout de l'effluent riche en phosphore 17.

Le procédé selon l'invention comprend une troisième étape de séparation de l'effluent riche en phosphore 17 dissout en une fraction liquide riche en phosphore dissout et une fraction solide riche en organismes accumulateurs de polyphosphate déchargés de phosphore.

Le procédé selon l'invention comprend une quatrième étape 103 de recirculation de l'effluent riche en phosphore 17 vers l'étape de traitement biologique, typiquement réalisée dans le réacteur biologique 11. Selon un mode de réalisation particulier dans lequel l'effluent léger 13 n'est pas recirculé dans l'étape 100, la recirculation de l'effluent riche en PAO 19 vers l'étape de traitement biologique permet d'enrichir la boue de l'étape 100 en PAO : en effet, cette recirculation permet d'exercer une pression sélective sur les microorganismes dans le réacteur biologique 11. Selon ce mode de réalisation, le procédé permet une densification globale de la boue, notamment dans le réacteur biologique 11.

Le procédé selon l'invention comprend une cinquième étape 108 de précipitation du phosphore dissout de la fraction liquide de l'effluent riche en phosphore dissout 17 sous forme d'un solide à base de phosphore 24, notamment un phosphate sous forme solide. La cinquième étape 108 peut être mise en œuvre dans un réacteur de précipitation 25, tel qu'un réacteur infiniment mélangé, ou un réacteur à lit fluidisé. Avantageusement, au moins une source de contre-ion est ajoutée lors de la cinquième étape de précipitation, pour améliorer le rendement de cette étape. Comme exemple de solide à base de phosphore 24, nous pouvons citer la struvite. La struvite est un complexe neutre constitué de magnésium (Mg²⁺), ammonium (NH₄⁺) or phosphate (PO₄³⁻) qui précipite en condition d'équimolarité entre ses constituants dans des conditions de pH typiquement entre 7,5 et 8,0. Le phosphate étant présent dans la fraction liquide de l'effluent riche en phosphore 17 et en présence d'ammonium sous forme d'ammoniaque (provenant d'un effluent dans le procédé comme expliqué plus loin ou d'une source externe), la source de contre-ion se fait par l'ajout de magnésium Mg²⁺. Dans le cas de précipitation de brushite ou apatite, la source de contre-ion se fait par l'ajout de calcium Ca²⁺.

La struvite est typiquement obtenue sous forme de granules. Lorsque les granules grossissent, ils atteignent le fond du réacteur de précipitation 25 où ils sont évacués. Les granules peuvent en outre être lavés, séchés et emballés pour être vendues comme engrais.

Le procédé selon l'invention permet d'optimiser la déphosphatation biologique par la mise en place d'un couplage entre le sélecteur 12 et le réacteur de relargage du phosphore 16. Ce couplage permet sur une partie ou la totalité de l'effluent de séparer l'effluent léger de l'effluent lourd. L'effluent lourd étant envoyé vers le réacteur de relargage du phosphore 16, seuls les PAO sont dirigés vers le réacteur de relargage du phosphore car les PAO sont plus denses que les boues conventionnelles floculées ou non. Le réacteur de relargage du phosphore peut ainsi être plus compact. De plus, les PAO peuvent ensuite être recirculés pour revenir dans le réacteur biologique 11 de traitement biologique d'où ils peuvent participer à un nouveau cycle de suraccumulation du phosphore en phase aérobie. La performance de la déphosphatation biologique en est donc améliorée.

Grâce à l'invention, un couplage entre le relargage optimisé du phosphore et la récupération/valorisation du phosphore par précipitation de struvite ou autre précipité à base de phosphore (tel que l'apatite ou la brushite) est réalisé. Comme davantage de phosphore est suraccumulé puis relargué, davantage de phosphore est récupéré lors de l'étape de précipitation (sous forme de struvite ou autre). Il en résulte que davantage de phosphore est retiré des boues avant d'être envoyé vers un autre traitement, par exemple en digestion. Cela limite fortement les problèmes liés à la précipitation non contrôle de la struvite (ou apatite, ou brushite) dans la filière boues et notamment dans les digesteurs et lors de la déshydratation. Cela entraîne une réduction des coûts de maintenance.

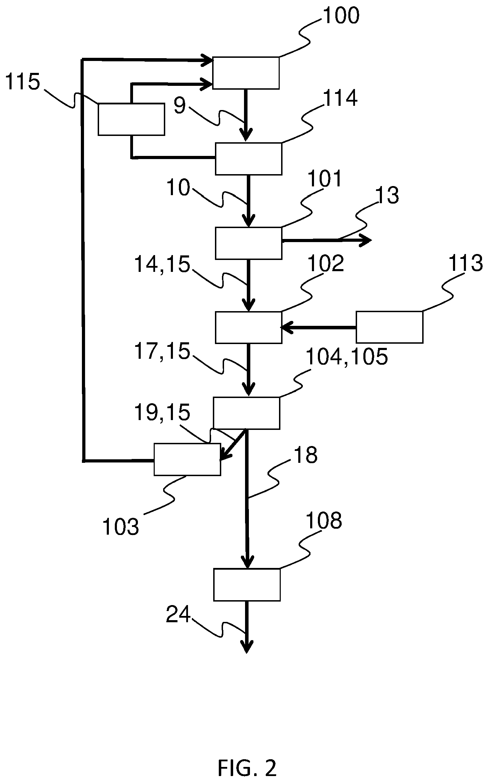

La figure 2 illustre les étapes d'un autre mode de réalisation du procédé de récupération de phosphore selon l'invention. Les étapes décrites dans la suite de la description peuvent faire partie du procédé selon l'invention mais ne sont pas obligatoires. Les étapes peuvent être associées entre elles ou faire partie du procédé selon l'invention isolément.

Selon un autre mode de réalisation de l'invention, la troisième étape 103 est une étape 104 d'épaississement de l'effluent riche en phosphore 17 contenant les organismes accumulateurs de polyphosphate 15 pour extraire de l'effluent 17 un centrat riche en phosphore 18 et un effluent épaissi 19 contenant les organismes accumulateurs de polyphosphate 15. L'effluent épaissi 19 peut être recirculé vers le réacteur biologique 11. L'effluent épaissi contient au minimum 20 g/L de matières en suspension, et préférentiellement au moins 30 g/L.

Selon un autre mode de réalisation du procédé selon l'invention, la troisième étape 103 est une étape 105 de clarification de l'effluent riche en phosphore 17 contenant les organismes accumulateurs de polyphosphate 15 pour extraire de l'effluent 17 un centrat riche en phosphore 18 et un effluent plus concentré en matière sèche 19 contenant les organismes accumulateurs de polyphosphate 15. L'effluent plus concentré en matière sèche 19 peut être recirculé vers le réacteur biologique 11. L'effluent plus concentré en matière sèche contient au minimum 3g/L de matières en suspension, et préférentiellement entre 6 et 20 g/L.

Selon un autre mode de réalisation du procédé selon l'invention, en plus des étapes 104, 105, ou l'une d'elles, ou sans les étapes 104, 105, la deuxième étape 102 de relargage du phosphore par les organismes accumulateurs de polyphosphate 15 chargés en phosphore en conditions anaérobie dans l'effluent 14 contenant les organismes accumulateurs de polyphosphate 15 comprend une étape 113 d'addition de carbone biodégradable 31 à l'effluent lourd 14, par exemple mais pas obligatoirement dans le réacteur de relargage 16. Le carbone biodégradable rapidement (aussi connu sous l'abréviation RBC pour son acronyme anglo-saxon Readily Biodegradable Carbon) favorise la libération de phosphore par les microorganismes. Alternativement et/ou conjointement, du carbone lentement biodégradable peut être ajouté, notamment sous forme de boues primaires, fermentées ou non. Des carbones facilement biodégradables sont bien connus de l'homme du métier. Ils sont par exemple définis dans «Activated Sludge Models ASM1, ASM2 and ASM3», édités par le groupe de travail de l'IWA sur la modélisation mathématique pour la conception et le fonctionnement du traitement biologique des eaux usées, Henze et al (2000), ISBN 1 900222 24 8. Des exemples de carbone facilement biodégradable sont des acides gras volatils, en particulier des acides carboxyliques (notamment des chaînes hydrocarbonées saturées en C1-C4, linéaires ou ramifiées substituées par un groupe COOH) tels que l'acide acétique. Les eaux usées prétraitées contiennent également des RBC: par conséquent, les RBC peuvent également être ajoutés en tant qu'eaux usées prétraitées. Enfin, les RBC peuvent également être générés par fermentation (hydrolytique ou acidogénique). La préfermentation de l'eau usée ou des boues primaires est une pratique courante. Un préfermenteur peut être par exemple un décanteur primaire avec un long temps de rétention des boues. On peut par exemple citer le procédé de fermentation et épaississement unifié (unified fermentation and thickening ou UFAT), décrit notamment dans le document US 6 387 264.

Le procédé selon l'invention peut comprendre, préalablement à la première étape 101 de séparation de la fraction solide d'au moins une partie de l'effluent 9, une étape 114 de clarification de l'effluent 9 d'eaux usées issues d'un traitement biologique. Cela permet de conserver les PAO dans le système de traitement biologique. Les PAO étant des bactéries plus denses que les autres bactéries, cette sélection des bactéries via le sélecteur 12 va permettre au système biologique de fonctionner avec des boues plus denses. La clarification qui suit le réacteur biologique 11 est améliorée. Il est donc possible de fonctionner à des concentrations en biomasse (boues) dans le système de traitement biologique plus élevée que le fonctionnement conventionnel et donc soit réduire le volume de réacteur biologique nécessaire au traitement, soit augmenter la quantité de pollution à traiter. Selon ce mode de réalisation particulier, le traitement biologique de l'invention 100 est suivi d'une étape 114 de clarification de la boue. Par rapport à un procédé de l'art antérieur, le procédé comprend, outre l'étape de clarification 114, une étape de séparation solide/solide 101 de la boue 10 issue de l'étape 114. La séparation solide/solide permet de produire un effluent lourd 14, c'est-à-dire une boue avec une densité plus importante que ce qui est pratiqué dans l'art antérieur. Une conséquence de cette séparation est que l'on concentre les PAO dans l'effluent lourd, qui est alors plus chargé en PAO que la boue issue de l'étape de traitement biologique 100, tandis que l'effluent léger 13 comprend des boues « pauvres » ou peu concentrées en PAO. Seul l'effluent « lourd » est soumis au traitement de récupération du phosphore, ce qui permet d'augmenter le rendement global de cette étape.

En outre, le procédé selon l'invention peut comprendre dans un autre mode de réalisation une étape 115 de recirculation d'au moins une partie de l'effluent clarifié après l'étape 114 de clarification de l'effluent 9 vers l'étape 100 de traitement biologique.

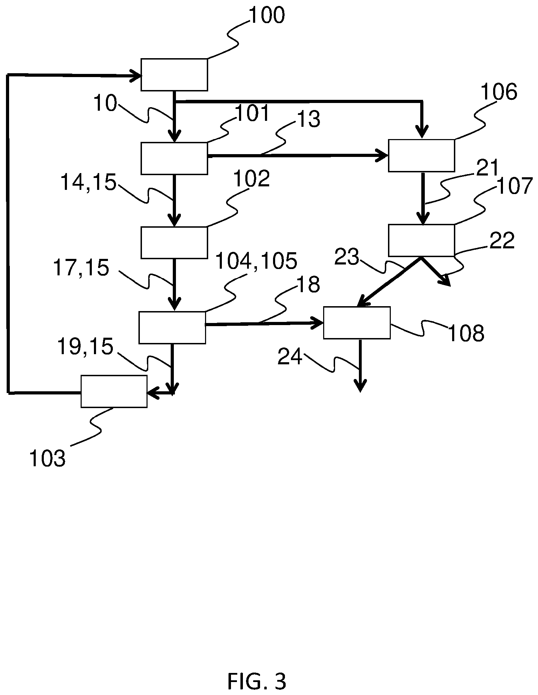

La figure 3 illustre les étapes d'un autre mode de réalisation du procédé de récupération de phosphore selon l'invention. Comme mentionné précédemment, les étapes décrites dans la suite de la description peuvent faire partie du procédé selon l'invention mais ne sont pas obligatoires. Les étapes peuvent être associées entre elles ou faire partie du procédé selon l'invention isolément.

Dans cet autre mode de réalisation illustré à la figure 3, le procédé selon l'invention comprend en outre une étape 106 de digestion, par exemple dans un digesteur 20, de l'effluent léger 13 et/ou de l'effluent 10 d'eaux usées issues d'une étape de traitement biologique pour former un digestat 21.

Le procédé selon l'invention peut comprendre une étape 107 de déshydratation du digestat 21 pour former une fraction solide déshydratée 22 et un effluent riche en ammonium 23. L'effluent riche en ammonium comprend une fraction solide et une fraction liquide. L'ammonium se trouve majoritairement sous forme dissoute dans la fraction liquide. Le digestat 21 est en fait un effluent riche en ammonium qui contient une fraction solide pauvre en ammonium et une fraction liquide riche en ammonium. En déshydratant le digestat 21, on sépare la fraction solide de la fraction liquide.

Dans un mode de réalisation, le solide à base de phosphore 24 est de la struvite, et lors de l'étape 108 de précipitation de struvite 24, le phosphore issu de l'effluent riche en phosphore 17 provient du centrat riche en phosphore 18 et l'ammonium provient de l'effluent riche en ammonium 23 ou d'un ajout externe d'ammonium. La précipitation sous forme de struvite permet de récupérer le phosphore. La struvite peut être utilisée ultérieurement comme engrais.

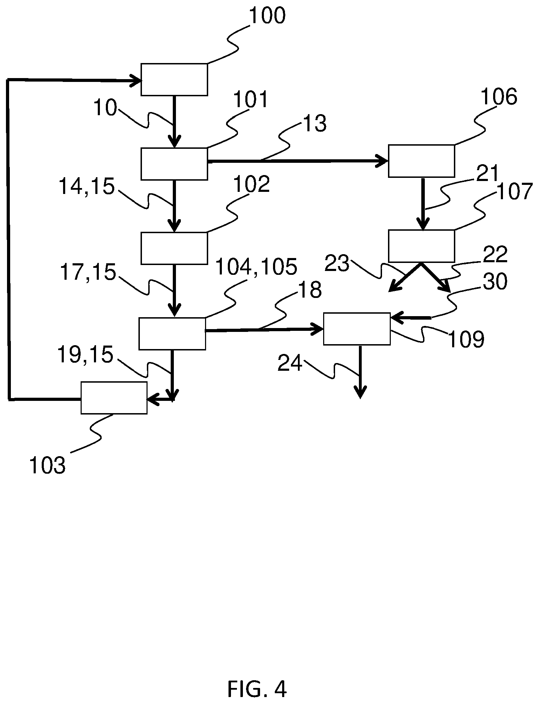

La figure 4 illustre les étapes d'un autre mode de réalisation du procédé de récupération de phosphore selon l'invention. Dans ce mode de réalisation, le solide à base de phosphore 24 est de l'apatite ou de la brushite, et le réacteur de précipitation 25 est alimenté par le centrat riche en phosphore 18 et par une source externe de calcium 30.

Dans cette configuration, l'ammonium provenant de l'effluent riche en ammonium 23 peut être utilisé seul pour produire de la struvite s'il contient suffisamment de phosphore, avec si besoin ajout de magnésium.

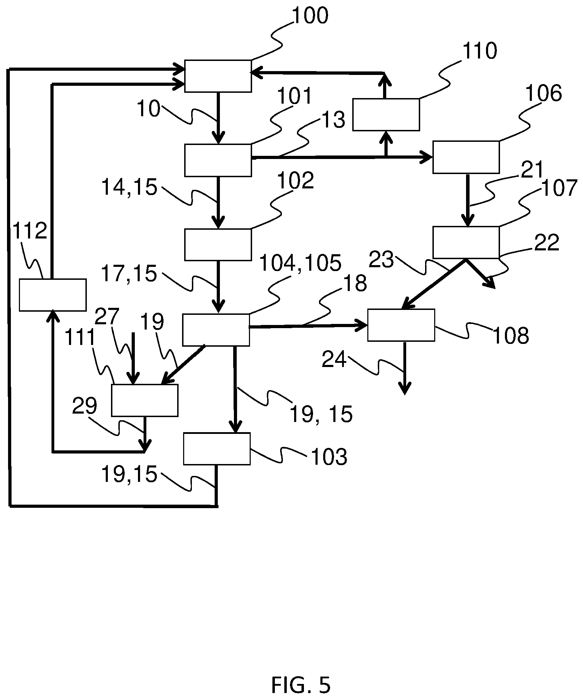

La figure 5 illustre les étapes d'un autre mode de réalisation du procédé de récupération de phosphore selon l'invention. Dans le mode de réalisation illustré à la figure 5, le procédé comprend une étape 110 de recirculation de l'effluent léger 13 vers le réacteur biologique 11.

En outre, le procédé selon l'invention peut comprendre une étape 111 de mise en contact de la fraction solide de la troisième étape, notamment d'un effluent épaissi 19 avec des eaux usées 27 dans un réservoir de contact 28 pour former un mélange 29 et une étape d'alimentation 112 du réacteur biologique 11 avec le mélange 29. Le but de ces étapes est d'améliorer les conditions de croissance des PAO en les mettant en contact avec le carbone des eaux brutes (eaux usées) en conditions anaérobie.

Ainsi, le procédé selon l'invention présente de multiples avantages. Il permet d'améliorer les procédés d'élimination et de récupération du phosphore sur les stations d'épuration. En effet, ce procédé est basé sur la suraccumulation du phosphore en condition aérobie par les PAO et par le relargage de ce phosphore par les PAO en condition anaérobie. Dans les procédés conventionnels de récupération du phosphore, le phosphore est extrait de la ligne de traitement des eaux via l'extraction des boues de PAO. Ces boues sont extraites de la file de traitement des eaux et généralement envoyées vers des traitements ultérieurs des boues (tels que épaississement, digestion, déshydratation, ...). Ces boues de PAO ne peuvent plus être réutilisées dans le cycle accumulation/relargage du phosphore qui a lieu sur la file de traitement des eaux. Cela limite la quantité de PAO qui peut réaliser cette adsorption et donc limite le taux de récupération du phosphore. Une quantité plus importante de phosphore étant récupérée grâce au procédé selon l'invention, moins de phosphore est à éliminer des réacteurs de traitement biologique. Cela signifie que moins ou pas du tout de traitement physico-chimique du phosphore (par ajout de sels métalliques) n'est nécessaire pour atteindre les qualités de rejet demandées de l'eau traitée en sortie de station d'épuration.

Le recyclage des PAO une fois qu'ils ont relargué leur phosphore permet de garantir un rendement supérieur de récupération du phosphore et de garantir une quantité maximale de PAO pour faire cette succession d'accumulation et de relargage.

L'avantage d'utiliser le sélecteur en amont du réacteur de relargage du phosphore est d'être capable de séparer les boues légères (qui sont dirigées vers un traitement ultérieur des boues) des boues lourdes, contenant les PAO. Ainsi, le réacteur de relargage du phosphore est optimisé. Il est principalement alimenté par les PAO, et son volume, calculé sur le temps de séjour des PAO dans le réacteur, peut donc être réduit.

Par ailleurs, le fait de recycler les PAO sur la file de traitement des eaux une fois passés dans le réacteur de relargage du phosphore permet de conserver des boues plus lourdes dans la file eau et donc de favoriser l'étape de clarification. Soit les clarificateurs secondaires (qui permettent la séparation de la liqueur mixte de l'eau traitée) peuvent alors être dimensionnés à des vitesses supérieures, soit les réacteurs biologiques peuvent fonctionner à des concentrations plus élevées sans impacter le fonctionnement des clarificateurs conventionnels. Dans les deux cas, les ouvrages sont plus petits et donc moins couteux.

Enfin, la combinaison du relargage du phosphore et de la précipitation à partir du phosphore, situé sur la file eau, permet de minimiser les quantités de phosphore envoyé vers la filière boue, et donc de réduire les risque de dépôts de struvite et autre précipités de phosphore dans les ouvrages et tuyauteries de la filières boue (e.g. le taux de phosphore dans les boues extraites peut être attendu moins fort si l'on arrive à récupérer un pourcentage plus important du phosphore de l'eau brute dans la file eau).

La mise en place du réacteur de relargage du phosphore et du réacteur de précipitation de struvite (ou apatite, brushite, ...) permet la récupération de phosphore sur des étapes non actuellement pourvues de déphosphatation biologique (zone anaérobie en tête de bassin biologique par exemple).

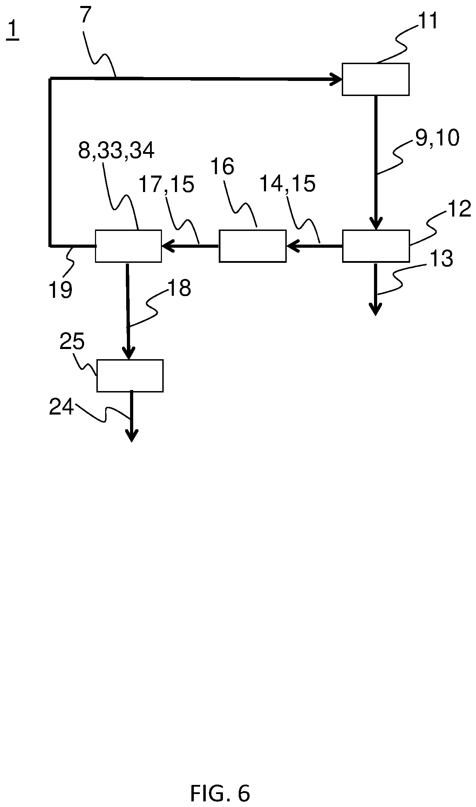

Les figures 6 à 8 représentent schématiquement une installation de récupération de phosphore selon l'invention. Les caractéristiques décrites dans la suite de la description peuvent faire partie de l'installation selon l'invention mais ne sont pas forcément obligatoires. Les caractéristiques peuvent être associées entre elles ou faire partie de l'installation selon l'invention isolément.

La figure 6 représente schématiquement un mode de réalisation de l'installation 1 de récupération de phosphore selon l'invention. L'installation 1 de récupération de phosphore dans un effluent 9, 10 d'eaux usées issues d'une étape de traitement biologique dans un réacteur biologique 11, ledit effluent comprenant une fraction solide et une fraction liquide caractérisée en ce qu'elle comprend un sélecteur 12, destiné à séparer au moins une partie de la fraction solide de l'effluent pour obtenir un effluent léger 13 et un effluent lourd 14, ledit effluent lourd 14 incluant des organismes accumulateurs de polyphosphate 15 chargé en phosphore, un réacteur de relargage 16 en sortie du sélecteur 12 et configuré de sorte que, en conditions anaérobie, les organismes accumulateurs de polyphosphate 15 chargé en phosphore de l'effluent lourd 14 relarguent du phosphore pour former un effluent riche en phosphore dissout 17 et contenant les organismes accumulateurs de polyphosphate 15 déchargés de phosphore, ledit effluent riche en phosphore 17 comprenant une fraction liquide riche en phosphore dissout. Il comprend en outre un séparateur 8 en sortie du réacteur de relargage 16 destiné à séparer l'effluent riche en phosphore 17 dissout en une fraction liquide riche en phosphore dissout, et une fraction solide riche en organismes accumulateurs de polyphosphate déchargés de phosphore. Il comprend aussi une boucle de recirculation 7 entre le séparateur 8 et le réacteur biologique 11 destinée à recirculer l'effluent riche en phosphore 17, et un réacteur de précipitation 25 en sortie du séparateur 8 configuré à être alimenté par la fraction liquide de l'effluent riche en phosphore dissout 17, de sorte à précipiter le phosphore dissout sous forme d'un solide à base de phosphore 24.

Dans un mode de réalisation, le sélecteur 8 est un épaississeur 33 configuré pour extraire dudit effluent 17 un centrat riche en phosphore 18 et un effluent épaissi 19 contenant les organismes accumulateurs de polyphosphate 15. Dans un autre mode de réalisation, le sélecteur 8 est un clarificateur 34 configuré pour extraire de l'effluent 17 un centrat riche en phosphore 18 et un effluent plus concentré en matière sèche 19 contenant les organismes accumulateurs de polyphosphate 15.

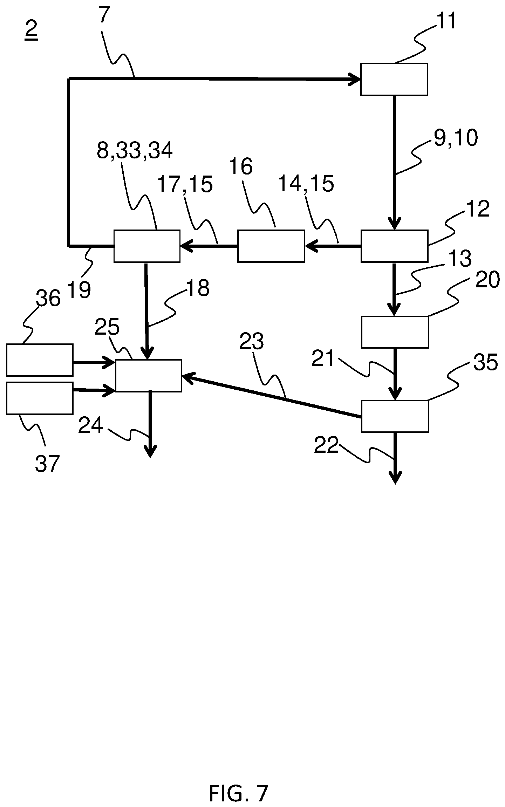

La figure 7 représente schématiquement un autre mode de réalisation de l'installation 2 de récupération de phosphore selon l'invention. L'installation 2 comprend un digesteur 20 en sortie du sélecteur 12 et configuré à être alimenté par l'effluent léger 13 et/ou l'effluent 10 d'eaux usées traités biologiquement, de sorte à former un digestat 21.

L'installation 2 peut avantageusement comprendre aussi, de façon non limitative, une unité de déshydratation 35 en sortie du digesteur 20 et configurée pour être alimentée par le digestat 21 de sorte à former une fraction solide déshydratée 22 et un effluent riche en ammonium 23.

Dans le cas où le solide à base de phosphore 24 est de la struvite, le réacteur de précipitation 25 est configuré pour être alimenté en phosphore par le centrat riche en phosphore 18 et en ammonium par l'effluent riche en ammonium 23, et/ou l'installation peut comprendre un injecteur 36 d'ammonium relié au réacteur de précipitation 25. Dans le cas où le solide à base de phosphore 24 est de l'apatite ou de la brushite, le réacteur de précipitation 25 est configuré pour être alimenté en phosphore par le centrat riche en phosphore 18, et l'installation comprend alors un injecteur 37 de calcium relié au réacteur de précipitation 25.

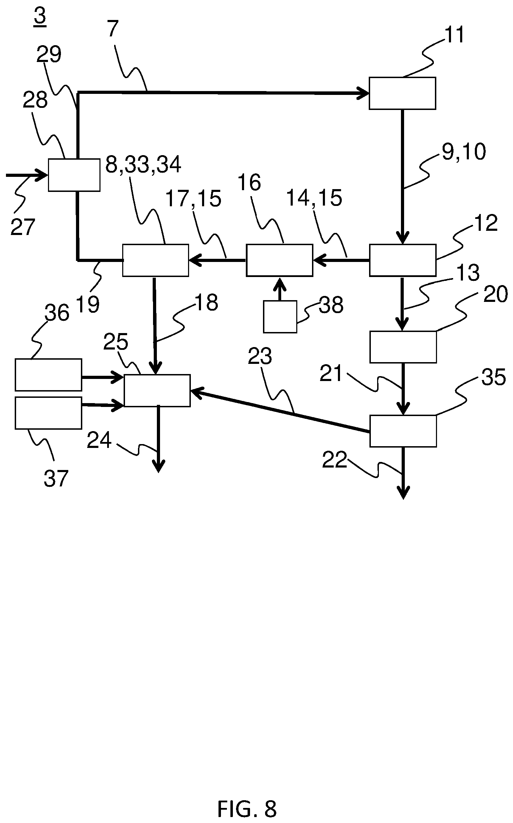

La figure 8 représente schématiquement un autre mode de réalisation de l'installation 3 de récupération de phosphore selon l'invention. Dans ce mode de réalisation, l'installation comprend un réservoir de contact 28 en sortie du séparateur 8 et configuré à être alimenté par l'effluent épaissi 19 et des eaux usées 27, de sorte à former un mélange 29, ledit réservoir de contact 28 étant configuré à alimenter le réacteur biologique 11 avec ledit mélange 29. Le réservoir 28 peut être sur la boucle de recirculation 7 mais il peut aussi être positionné sur une boucle parallèle.

Enfin, l'installation 3 peut comprendre un injecteur 38 de carbone biodégradable 31 relié au réacteur de relargage 16.

Les avantages des différents modes de réalisation de l'installation selon l'invention ont été expliqués précédemment dans la description du procédé selon l'invention.

## Revendications

1. Procédé de récupération de phosphore dans un effluent (9, 10) d'eaux usées issues d'une étape de traitement biologique (100), ledit effluent comprenant une fraction solide et une fraction liquide, **caractérisé en ce qu'**il comprend :
a. une première étape (101) de séparation solide/solide d'au moins une partie de la fraction solide de l'effluent (9, 10), pour obtenir un effluent léger (13) et un effluent lourd (14),
ledit effluent lourd (14) incluant des organismes accumulateurs de polyphosphate (15) chargés en phosphore, ledit effluent léger (13) étant déchargé d'organismes accumulateurs de polyphosphate (15) ;
b. une deuxième étape (102) de relargage du phosphore par lesdits organismes accumulateurs de polyphosphate (15) chargés en phosphore de l'effluent lourd (14), pour former un effluent riche en phosphore dissout (17) et contenant les organismes accumulateurs de polyphosphate (15) déchargés de phosphore, ledit effluent riche en phosphore (17) comprenant une fraction liquide riche en phosphore dissout ;
c. une troisième étape (104, 105) de séparation de l'effluent riche en phosphore dissout en une fraction liquide riche en phosphore dissout (18), et une fraction solide riche en organismes accumulateurs de polyphosphate déchargés de phosphore (19) ;
d. une quatrième étape (103) de recirculation de la fraction solide de la troisième étape (18) vers l'étape de traitement biologique ;
e. une cinquième étape (108) de précipitation du phosphore dissout de la fraction liquide de l'effluent riche en phosphore dissout (19) sous forme d'un solide à base de phosphore (24),
le procédé comprenant préalablement à la première étape (101) de séparation de la fraction solide d'au moins une partie de l'effluent (9), une étape (114) de clarification de l'effluent (9) d'eaux usées issues d'un traitement biologique.

2. Procédé selon la revendication 1, **caractérisé en ce que** la troisième étape est une étape (104) d'épaississement de l'effluent riche en phosphore (17) contenant les organismes accumulateurs de polyphosphate (15) pour extraire dudit effluent (17) un centrat riche en phosphore (18) et un effluent épaissi (19) contenant les organismes accumulateurs de polyphosphate (15).

3. Procédé selon la revendication 1, **caractérisé en ce que** la troisième étape est une étape (105) de clarification de l'effluent riche en phosphore (17) contenant les organismes accumulateurs de polyphosphate (15) pour extraire de l'effluent (17) un centrat riche en phosphore (18) et un effluent plus concentré en matière sèche (19) contenant les organismes accumulateurs de polyphosphate (15).

4. Procédé selon l'une quelconque des revendications précédentes, **caractérisé en ce qu'**il comprend en outre une étape (106) de digestion de l'effluent léger (13) et/ou de l'effluent (10) d'eaux usées issues d'une étape de traitement biologique pour former un digestat (21).

5. Procédé selon la revendication 4, **caractérisé en ce qu'**il comprend une étape (107) de déshydratation du digestat (21) pour former une fraction solide déshydratée (22) et un effluent riche en ammonium (23).

6. Procédé selon la revendication 5, **caractérisé en ce que** le solide à base de phosphore (24) est de la struvite, et lors de l'étape (108) de précipitation de struvite (24), le phosphore issu de l'effluent riche en phosphore (17) provient de la fraction liquide riche en phosphore dissout de la troisième étape (18) et l'ammonium provient de l'effluent riche en ammonium (23) et/ou d'un ajout externe d'ammonium.

7. Procédé selon l'une quelconque des revendications 1 à 5, **caractérisé en ce que** le solide à base de phosphore (24) est de l'apatite ou de la brushite, et le réacteur de précipitation (25) est alimenté par le centrat riche en phosphore (18) et par une source externe de calcium (30).

8. Procédé selon l'une quelconque des revendications précédentes, **caractérisé en ce qu'**il comprend une étape (110) de recirculation de l'effluent léger (13) vers le réacteur biologique (11).

9. Procédé selon l'une quelconque des revendications 2 ou 3, **caractérisé en ce qu'**il comprend :
- une étape (111) de mise en contact de la fraction solide de la troisième étape (19) avec des eaux usées (27) pour former un mélange (29) ;
- une étape d'alimentation (112) avec le mélange (29) de l'étape de traitement biologique.

10. Procédé selon l'une quelconque des revendications précédentes, **caractérisé en ce que** la deuxième étape (102) de relargage du phosphore comprend une étape (113) d'addition de carbone biodégradable (31) à l'effluent lourd (14).

11. Procédé selon l'une des revendications 1 à 10, **caractérisé en ce qu'**il comprend une étape (115) de recirculation d'au moins une partie de l'effluent clarifié après l'étape (114) de clarification de l'effluent (9) vers l'étape de traitement biologique (100).

12. Installation (1, 2, 3) de récupération de phosphore dans un effluent (9, 10) d'eaux usées issues d'une étape de traitement biologique dans un réacteur biologique (11), ledit effluent comprenant une fraction solide et une fraction liquide, ladite installation étant **caractérisée en ce qu'**elle comprend :
- un système de clarification destiné à la clarification de l'effluent (9) d'eaux usées issues d'un traitement biologique et la formation d'un effluent (10),
- un sélecteur (12) de séparation solide/solide, destiné à séparer au moins une partie de la fraction solide de l'effluent pour obtenir un effluent léger (13) et un effluent lourd (14), ledit effluent lourd (14) incluant des organismes accumulateurs de polyphosphate (15) chargé en phosphore, ledit effluent léger (13) étant déchargé d'organismes accumulateurs de polyphosphate (15),
- un réacteur de relargage (16) en sortie du sélecteur (12) et configuré de sorte que, en conditions anaérobie, les organismes accumulateurs de polyphosphate (15) chargé en phosphore de l'effluent lourd (14) relarguent du phosphore pour former un effluent riche en phosphore dissout (17) et contenant les organismes accumulateurs de polyphosphate (15) déchargés de phosphore, ledit effluent riche en phosphore (17) comprenant une fraction liquide riche en phosphore dissout,
- un séparateur (8) en sortie du réacteur de relargage (16) destiné à séparer l'effluent riche en phosphore (17) dissout en une fraction liquide riche en phosphore dissout, et une fraction solide riche en organismes accumulateurs de polyphosphate déchargés de phosphore,
- une boucle de recirculation (7) entre le séparateur (8) et le réacteur biologique (11) destinée à recirculer l'effluent riche en phosphore (17),
- un réacteur de précipitation (25) en sortie du séparateur (8) configuré à être alimenté par la fraction liquide de l'effluent riche en phosphore dissout (17), de sorte à précipiter le phosphore dissout sous forme d'un solide à base de phosphore (24).

13. Installation (1, 2, 3) de récupération de phosphore selon la revendication 12, **caractérisée en ce que** le séparateur (8) est un épaississeur (33) configuré pour extraire dudit effluent (17) un centrat riche en phosphore (18) et un effluent épaissi (19) contenant les organismes accumulateurs de polyphosphate (15).

14. Installation (1, 2, 3) de récupération de phosphore selon la revendication 12, **caractérisée en ce que** le séparateur (8) est un clarificateur (34) configuré pour extraire de l'effluent (17) un centrat riche en phosphore (18) et un effluent plus concentré en matière sèche (19) contenant les organismes accumulateurs de polyphosphate (15).

15. Installation (2, 3) de récupération de phosphore selon l'une quelconque des revendications 12 à 14, **caractérisée en ce qu'**elle comprend un digesteur (20) en sortie du sélecteur (12) et configuré à être alimenté par l'effluent léger (13) et/ou l'effluent (10) d'eaux usées traités biologiquement, de sorte à former un digestat (21).

16. Installation (2, 3) de récupération de phosphore selon la revendication 15, **caractérisée en ce qu'**elle comprend une unité de déshydratation (35) en sortie du digesteur (20) et configurée pour être alimentée par le digestat (21) de sorte à former une fraction solide déshydratée (22) et un effluent riche en ammonium (23).

17. Installation (2, 3) de récupération de phosphore selon la revendication 16, **caractérisée en ce que** le solide à base de phosphore (24) est de la struvite, et **en ce que** le réacteur de précipitation (25) est configuré pour être alimenté en phosphore par le centrat riche en phosphore (18) et en ammonium par l'effluent riche en ammonium (23), et/ou **en ce que** l'installation comprend un injecteur (36) d'ammonium relié au réacteur de précipitation (25).

18. Installation (2, 3) de récupération de phosphore selon l'une quelconque des revendications 12 à 17, **caractérisée en ce que** le solide à base de phosphore (24) est de l'apatite ou de la brushite, et **en ce que** le réacteur de précipitation (25) est configuré pour être alimenté en phosphore par le centrat riche en phosphore (18), et **en ce que** l'installation comprend un injecteur (37) de calcium relié au réacteur de précipitation (25).

19. Installation (3) de récupération de phosphore selon l'une quelconque des revendications 12 à 18, **caractérisée en ce qu'**elle comprend un réservoir de contact (28) en sortie du séparateur (8) et configuré à être alimenté par la fraction solide riche en organismes accumulateurs de polyphosphate déchargés de phosphore (19) et des eaux usées (27), de sorte à former un mélange (29), ledit réservoir de contact (28) étant configuré à alimenter le réacteur biologique (11) avec ledit mélange (29).

20. Installation (3) de récupération de phosphore selon l'une quelconque des revendications 12 à 19, **caractérisée en ce qu'**elle comprend un injecteur (38) de carbone biodégradable (31) relié au réacteur de relargage (16).

## Patentansprüche

1. Verfahren zur Rückgewinnung von Phosphor aus einem Abwasserausfluss (9, 10) aus einer biologischen Behandlungsstufe (100), wobei der genannte Abwasserausfluss eine feste Fraktion und eine flüssige Fraktion aufweist, **dadurch gekennzeichnet, dass** es umfasst:
a. einen ersten Schritt (101) zur Fest-Fest-Trennung mindestens eines Teils der festen Fraktion des Abwassers (9, 10), um ein leichtes Abwasser (13) und ein schweres Abwasser (14) zu erhalten,
wobei das schwere Abwasser (14) mit Phosphor beladene Polyphosphat-akkumulierende Organismen (15) enthält, wobei das leichte Abwasser (13) von Polyphosphat-akkumulierenden Organismen (15) abgereichert ist;
b. einen zweiten Schritt (102) zur Freisetzung von Phosphor durch die mit Phosphor beladenen Polyphosphat-akkumulierenden Organismen (15) aus dem schweren Abwasser (14), um ein an gelöstem Phosphor reiches Abwasser (17) zu bilden, der die von Phosphor befreiten Polyphosphat-akkumulierenden Organismen (15) enthält, wobei das an Phosphor reiche Abwasser (17) eine an gelöstem Phosphor reiche flüssige Fraktion aufweist;
c. einen dritten Schritt (104, 105) zur Trennung des an gelöstem Phosphor reichen Abwassers in eine an gelöstem Phosphor reiche flüssige Fraktion (18) und eine an mit Phosphor entladenen Polyphosphat-akkumulierenden Organismen reiche feste Fraktion (19);
d. einen vierten Schritt (103) zum Rückführen der festen Fraktion (9) aus dem dritten Schritt in den biologischen Behandlungsschritt;
e. einen fünften Schritt (108) zur Ausfällung des gelösten Phosphors aus der flüssigen Fraktion (18) des an gelöstem Phosphor reichen Abwassers in Form eines phosphorhaltigen Feststoffs (24),
wobei das Verfahren vor dem ersten Schritt (101) zur Abtrennung der festen Fraktion aus mindestens einem Teil des Abwassers (9) einen Schritt (114) zur Klärung des Abwassers (9) aus einer biologischen Behandlung umfasst.

2. Verfahren nach Anspruch 1, **dadurch gekennzeichnet, dass** der dritte Schritt ein Schritt (104) zum Eindicken des phosphorreichen Abwassers (17) ist, das die Polyphosphat-akkumulierenden Organismen (15) enthält, um aus diesem Abwasser (17) ein phosphorreiches Zentrat (18) und ein eingedicktes Abwasser (19), das die Polyphosphat-akkumulierenden Organismen (15) enthält, zu gewinnen.

3. Verfahren nach Anspruch 1, **dadurch gekennzeichnet, dass** der dritte Schritt ein Schritt (105) zur Klärung des phosphorreichen Abwassers (17), das die Polyphosphat-akkumulierenden Organismen (15) enthält, ist, um aus dem Abwasser (17) ein phosphorreiches Zentrat (18) und ein Abwasser (19) mit höherer Trockensubstanzkonzentration, das die Polyphosphat-akkumulierenden Organismen (15) enthält, abzutrennen.

4. Verfahren nach einem der vorstehenden Ansprüche, **dadurch gekennzeichnet, dass** es ferner einen Schritt (106) zur Vergärung des leichten Abwassers (13) und/oder des Abwassers (10) aus einem biologischen Behandlungsschritt umfasst, um einen Gärrückstand (21) zu bilden.

5. Verfahren nach Anspruch 4, **dadurch gekennzeichnet, dass** es einen Schritt (107) zur Entwässerung des Gärrückstands (21) umfasst, um eine entwässerte Feststofffraktion (22) und ein ammoniumreiches Abwasser (23) zu bilden.

6. Verfahren nach Anspruch 5, **dadurch gekennzeichnet, dass** der phosphorhaltige Feststoff (24) Struvit ist und bei dem Schritt (108) der Ausfällung von Struvit (24) der aus dem phosphorreichen Abwasser (17) stammende Phosphor aus der phosphorreichen, gelösten flüssigen Fraktion (18) des dritten Schritts stammt und das Ammonium aus dem ammoniumreichen Abwasser (23) und/oder einer externen Ammoniumzugabe stammt.

7. Verfahren nach einem der Ansprüche 1 bis 5, **dadurch gekennzeichnet, dass** der phosphorhaltige Feststoff (24) Apatit oder Brushit ist und der Fällreaktor (25) mit dem phosphorreichen Zentrat (18) und einer externen Kalziumquelle (30) gespeist wird.

8. Verfahren nach einem der vorstehenden Ansprüche, **dadurch gekennzeichnet, dass** es einen Schritt (110) zum Rückführen des leichten Abwassers (13) in den biologischen Reaktor (11) umfasst.

9. Verfahren nach einem der Ansprüche 2 oder 3, **dadurch gekennzeichnet, dass** es umfasst:
- einen Schritt (111) des Inkontaktbringens der festen Fraktion (19) aus dem dritten Schritt mit Abwasser (27) zur Bildung eines Gemisches (29);
- einen Schritt (112) der Zuführung des Gemisches (29) in den biologischen Behandlungsschritt.

10. Verfahren nach einem der vorstehenden Ansprüche, **dadurch gekennzeichnet, dass** der zweite Schritt (102) zur Freisetzung von Phosphor einen Schritt (113) der Zugabe von biologisch abbaubarem Kohlenstoff (31) zum schweren Abwasser (14) umfasst.

11. Verfahren nach einem der Ansprüche 1 bis 10, **dadurch gekennzeichnet, dass** es einen Schritt (115) zur Rückführung mindestens eines Teils des geklärten Abwassers nach dem Schritt (114) zur Klärung des Abwassers (9) in den Schritt der biologischen Behandlung (100) umfasst.

12. Anlage (1, 2, 3) zur Phosphorrückgewinnung aus einem Abwasserausfluss (9, 10) aus einer biologischen Behandlungsstufe in einem biologischen Reaktor (11), wobei der Abwasserausfluss eine feste Fraktion und eine flüssige Fraktion aufweist, wobei die Anlage **dadurch gekennzeichnet ist, dass** sie aufweist:
- ein Klärsystem zur Klärung des Abwassers (9) aus einer biologischen Behandlung und zur Bildung eines Abwassers (10),
- einen Fest-Fest-Separationsselektor (12) zur Abtrennung mindestens eines Teils der Feststofffraktion aus dem Abwasser, um ein leichtes Abwasser (13) und ein schweres Abwasser (14) zu erhalten, wobei das schwere Abwasser (14) mit Phosphor beladene Polyphosphat-akkumulierende Organismen (15) enthält, wobei das leichte Abwasser (13) von Polyphosphat-akkumulierenden Organismen (15) abgereichert ist,
- einen Freisetzungsreaktor (16) am Ausgang des Selektors (12), der so ausgelegt ist, dass unter anaeroben Bedingungen die mit Phosphor beladenen Polyphosphat-akkumulierenden Organismen (15) des schweren Abwassers (14) Phosphor freisetzen, um ein an gelöstem Phosphor reiches Abwasser (17) zu bilden, das die von Phosphor entladenen Polyphosphat-akkumulierenden Organismen (15) enthält, wobei das an Phosphor reiche Abwasser (17) eine an gelöstem Phosphor reiche flüssige Fraktion aufweist,
- einen Separator (8) am Ausgang des Freisetzungsreaktors (16), der dazu dient, das an gelöstem Phosphor reiche Abwasser (17) in eine an gelöstem Phosphor reiche flüssige Fraktion und eine an Phosphor entladenen Polyphosphat-akkumulierenden Organismen reiche feste Fraktion zu trennen,
- einen Rückführkreislauf (7) zwischen dem Separator (8) und dem biologischen Reaktor (11) zur Rückführung des an gelöstem Phosphor reichen Abwassers (17),
- einen Fällreaktor (25) am Ausgang des Separators (8), der so ausgelegt ist, dass er mit der flüssigen Fraktion des an gelöstem Phosphor reichen Abwassers (17) gespeist wird, um den gelösten Phosphor in Form eines phosphorhaltigen Feststoffs (24) auszufällen.

13. Anlage (1, 2, 3) zur Phosphorrückgewinnung nach Anspruch 12, **dadurch gekennzeichnet, dass** der Separator (8) ein Eindicker (33) ist, der so ausgelegt ist, dass er aus dem Abwasser (17) ein phosphorreiches Zentrat (18) und ein eingedicktes Abwasser (19), das die Polyphosphat-akkumulierenden Organismen (15) enthält, abtrennt.

14. Anlage (1, 2, 3) zur Phosphorrückgewinnung nach Anspruch 12, **dadurch gekennzeichnet, dass** der Separator (8) ein Klärbecken (34) ist, das so ausgelegt ist, dass es aus dem Abwasser (17) ein phosphorreiches Zentrat (18) und ein Abwasser (19) mit höherer Trockensubstanzkonzentration, das die Polyphosphat-akkumulierenden Organismen (15) enthält, abtrennt.

15. Anlage (2, 3) zur Phosphorrückgewinnung nach einem der Ansprüche 12 bis 14, **dadurch gekennzeichnet, dass** sie einen Fermenter (20) am Ausgang des Selektors (12) aufweist, der so ausgelegt ist, dass er mit dem leichten Abwasser (13) und/oder dem biologisch behandelten Abwasser (10) beschickt wird, um einen Gärrückstand (21) zu bilden.

16. Anlage (2, 3) zur Phosphorrückgewinnung nach Anspruch 15, **dadurch gekennzeichnet, dass** sie eine Entwässerungseinheit (35) am Ausgang des Fermenters (20) aufweist, die so ausgelegt ist, dass sie mit dem Gärrückstand (21) beschickt wird, um eine entwässerte Feststofffraktion (22) und ein ammoniumreiches Abwasser (23) zu bilden.

17. Anlage (2, 3) zur Phosphorrückgewinnung nach Anspruch 16, **dadurch gekennzeichnet, dass** der phosphorhaltige Feststoff (24) Struvit ist und dass der Fällreaktor (25) so ausgelegt ist, dass er mit Phosphor aus dem phosphorreichen Zentrat (18) und mit Ammonium aus dem ammoniumreichen Abwasser (23) mit Ammonium versorgt wird, und/oder dass die Anlage einen mit dem Fällreaktor (25) verbundenen Ammoniuminjektor (36) aufweist.

18. Anlage (2, 3) zur Phosphorrückgewinnung nach einem der Ansprüche 12 bis 17, **dadurch gekennzeichnet, dass** der Phosphorfeststoff (24) Apatit oder Brushit ist und dass der Fällreaktor (25) so ausgelegt ist, dass er mit Phosphor aus dem phosphorreichen Zentrat (18) versorgt wird, und dass die Anlage einen mit dem Fällreaktor (25) verbundenen Kalzium-Injektor (37) aufweist.

19. Anlage (3) zur Phosphorrückgewinnung gemäß einem der Ansprüche 12 bis 18, **dadurch gekennzeichnet, dass** sie einen Kontaktbehälter (28) am Ausgang des Separators (8) aufweist, der so ausgelegt ist, dass er mit der festen Fraktion (19), die reich an phosphorabgegebenen Polyphosphat-akkumulierenden Organismen ist, und mit Abwasser (27) gespeist wird, um ein Gemisch (29) zu bilden, wobei der Kontaktbehälter (28) so ausgelegt ist, dass er den biologischen Reaktor (11) mit dem Gemisch (29) versorgt.

20. Anlage (3) zur Phosphorrückgewinnung nach einem der Ansprüche 12 bis 19, **dadurch gekennzeichnet, dass** sie einen Injektor (38) für biologisch abbaubaren Kohlenstoff (31) aufweist, der mit dem Freisetzungsreaktor (16) verbunden ist.

## Claims

1. Method for recovering phosphorus from a wastewater effluent (9, 10) originating from a biological treatment stage (100), said effluent comprising a solid fraction and a liquid fraction, **characterised in that** it comprises:
a. a first solid-solid separation stage (101) of at least part of the solid fraction of the effluent (9, 10), to obtain a light effluent (13) and a heavy effluent (14),
said heavy effluent (14) containing phosphorus-loaded polyphosphate-accumulating organisms (15), said light effluent (13) being free of polyphosphate-accumulating organisms (15);
b. a second stage (102) of releasing phosphorus from said phosphorus-loaded polyphosphate-accumulating organisms (15) in the heavy effluent (14), to form an effluent rich in dissolved phosphorus (17) and containing the polyphosphate-accumulating organisms (15) from which phosphorus has been released, said phosphorus-rich effluent (17) comprising a liquid fraction rich in dissolved phosphorus;
c. a third stage (104, 105) of separating the effluent rich in dissolved phosphorus into a liquid fraction rich in dissolved phosphorus (18) and a solid fraction rich in phosphorus-depleted polyphosphate-accumulating organisms (19);
d. a fourth step (103) of recirculating the solid fraction from the third step (18) back to the biological treatment step;
e. a fifth stage (108) for precipitating the dissolved phosphorus from the liquid fraction of the effluent rich in dissolved phosphorus (19) in the form of a phosphorus-based solid (24),
the process comprising, prior to the first step (101) of separating the solid fraction from at least part of the effluent (9), a step (114) of clarifying the effluent (9) of wastewater resulting from biological treatment.

2. The method according to claim 1, **characterised in that** the third step is a step (104) of thickening the phosphorus-rich effluent (17) containing the polyphosphate-accumulating organisms (15) to extract from said effluent (17) a phosphorus-rich supernatant (18) and a thickened effluent (19) containing the polyphosphate-accumulating organisms (15).

3. The method according to claim 1, **characterised in that** the third step is a step (105) of clarifying the phosphorus-rich effluent (17) containing the polyphosphate-accumulating organisms (15) to extract from the effluent (17) a phosphorus-rich supernatant (18) and an effluent with a higher dry matter concentration (19) containing the polyphosphate-accumulating organisms (15).

4. The method according to any one of the preceding claims, **characterised in that** it further comprises a step (106) of digesting the light effluent (13) and/or the effluent (10) of wastewater from a biological treatment step to form a digestate (21).

5. The method according to claim 4, **characterised in that** it comprises a step (107) of dewatering the digestate (21) to form a dewatered solid fraction (22) and an ammonium-rich effluent (23).

6. The method according to claim 5, **characterised in that** the phosphorus-based solid (24) is struvite, and during the step (108) of precipitating struvite (24), the phosphorus from the phosphorus-rich effluent (17) is derived from the phosphorus-rich dissolved liquid fraction of the third step (18) and the ammonium is derived from the ammonium-rich effluent (23) and/or an external addition of ammonium.

7. The method according to any one of claims 1 to 5, **characterised in that** the phosphorus-based solid (24) is apatite or brushite, and the precipitation reactor (25) is fed with the phosphorus-rich centrate (18) and an external source of calcium (30).

8. The method according to any one of the preceding claims, **characterised in that** it comprises a step (110) of recirculating the light effluent (13) to the biological reactor (11).

9. The method according to any one of claims 2 or 3, **characterised in that** it comprises:
- a step (111) of bringing the solid fraction from the third step (19) into contact with waste water (27) to form a mixture (29);
- a step (112) of feeding the mixture (29) to the biological treatment stage.

10. The method according to any one of the preceding claims, **characterised in that** the second step (102) for phosphorus release comprises a step (113) of adding biodegradable carbon (31) to the heavy effluent (14).

11. The method according to any one of claims 1 to 10, **characterised in that** it comprises a step (115) of recirculating at least part of the clarified effluent after the effluent clarification step (114) (9) back to the biological treatment step (100).

12. A plant (1, 2, 3) for recovering phosphorus from an effluent (9, 10) of wastewater originating from a biological treatment stage in a biological reactor (11), said effluent comprising a solid fraction and a liquid fraction, said plant being **characterised in that** it comprises:
- a clarification system for clarifying the effluent (9) of wastewater from biological treatment and forming an effluent (10),
- a solid-solid separation selector (12), designed to separate at least part of the solid fraction from the effluent to obtain a light effluent (13) and a heavy effluent (14), said heavy effluent (14) containing phosphorus-laden polyphosphate-accumulating organisms (15), said light effluent (13) being free of polyphosphate-accumulating organisms (15),
- a release reactor (16) at the outlet of the separator (12) and configured such that, under anaerobic conditions, the phosphorus-loaded polyphosphate-accumulating organisms (15) in the heavy effluent (14) release phosphorus to form a phosphorus-rich effluent (17) and a phosphorus- , containing the phosphorus-depleted polyphosphate-accumulating organisms (15), said phosphorus-rich effluent (17) comprising a liquid fraction rich in dissolved phosphorus,
- a separator (8) at the outlet of the release reactor (16) designed to separate the effluent rich in dissolved phosphorus (17) into a liquid fraction rich in dissolved phosphorus and a solid fraction rich in polyphosphate-accumulating organisms that have released phosphorus,
- a recirculation loop (7) between the separator (8) and the biological reactor (11) for recirculating the phosphorus-rich effluent (17),
- a precipitation reactor (25) at the outlet of the separator (8), configured to be fed by the liquid fraction of the effluent rich in dissolved phosphorus (17), so as to precipitate the dissolved phosphorus in the form of a phosphorus-based solid (24).

13. The plant (1, 2, 3) for recovering phosphorus according to claim 12, **characterised in that** the separator (8) is a thickener (33) configured to extract from said effluent (17) a phosphorus-rich supernatant (18) and a thickened effluent (19) containing the polyphosphate-accumulating organisms (15).

14. The plant (1, 2, 3) for recovering phosphorusaccording to claim 12, **characterised in that** the separator (8) is a clarifier (34) configured to extract from the effluent (17) a phosphorus-rich supernatant (18) and an effluent with a higher dry matter concentration (19) containing the polyphosphate-accumulating organisms (15).

15. The plant (2, 3) for recovering phosphorus according to any one of claims 12 to 14, **characterised in that** it comprises a digester (20) downstream of the separator (12) and configured to be fed by the light effluent (13) and/or the biologically treated wastewater effluent (10), so as to form a digestate (21).

16. The plant (2, 3) for recovering phosphorus according to claim 15, **characterised in that** it comprises a dewatering unit (35) at the output of the digester (20) and configured to be fed with the digestate (21) so as to form a dewatered solid fraction (22) and an ammonium-rich effluent (23).

17. The plant (2, 3) for recovering phosphorus according to claim 16, **characterised in that** the phosphorus-based solid (24) is struvite, and **in that** the precipitation reactor (25) is configured to be fed with phosphorus from the phosphorus-rich centrate (18) and with ammonium from the ammonium-rich effluent (23), and/or in that the plant comprises an ammonium injector (36) connected to the precipitation reactor (25).

18. The plant (2, 3) for recovering phosphorus according to any one of claims 12 to 17, **characterised in that** the phosphorus-based solid (24) is apatite or brushite, and **in that** the precipitation reactor (25) is configured to be supplied with phosphorus by the phosphorus-rich centrate (18), and **in that** the plant comprises a calcium injector (37) connected to the precipitation reactor (25).

19. The plant (3) for recovering phosphorus according to any one of claims 12 to 18, **characterised in that** it comprises a contact tank (28) at the outlet of the separator (8) and configured to be fed by the solid fraction rich in phosphorus-depleted polyphosphate-accumulating organisms (19) and wastewater (27), so as to form a mixture (29), said contact tank (28) being configured to feed the biological reactor (11) with said mixture (29).

20. The plant (3) for recovering phosphorus according to any one of claims 12 to 19, **characterised in that** it comprises an injector (38) for biodegradable carbon (31) connected to the release reactor (16).
